# FASCICULE DE BREVET EUROPEEN

(11) **EP 0 547 942 B1**
(45) Date de publication et mention de la délivrance du brevet: **03.04.1996**
(21) Numéro de dépôt: 92403303.8
(22) Date de dépôt: 07.12.1992
(51) Int. Cl.: F16L 37/084

(54) **Dispositif de raccord rapide pour la liaison étanche entre eux de deux tubes ou tuyaux rigides ou semi-rigides**
Schnellverbindungseinrichtung zur dichten Verbindung zweier Leitungen oder zweier starrer oder halbstarrer Rohre
Quick acting coupling device for the sealed connection between two tubes or two rigid or semi-rigid pipes

(30) Priorité: 18.12.1991 FR 9115709
(43) Date de publication de la demande: 23.06.1993
(73) Titulaire: HUTCHINSON, F-75008 Paris (FR)
(72) Inventeur: Godeau, Denis, F-45260 Vieilles Maisons sur Joudry (FR)
(74) Mandataire: Orès, Bernard

(56) Documents cités:
- EP-A- 0 060 309
- EP-A- 0 306 126
- DE-U- 8 522 062
- FR-A- 1 540 896
- US-A- 3 015 510
- US-A- 4 781 400
- US-A- 5 069 424

## Description

L'invention a pour objet un dispositif de raccord rapide pour la liaison étanche entre eux de deux tubes ou tuyaux rigides ou semi-rigides.

Le problème de la liaison étanche entre eux de deux tubes ou tuyaux dont l'un au moins est rigide ou semi-rigide, par exemple en métal ou en matière plastique, a déjà reçu de très nombreuses solutions qui diffèrent entre elles, notamment, par la présence ou l'absence de joint d'étanchéité. Ainsi, lorsque l'un des éléments du raccord est en un matériau souple, comme du caoutchouc, un joint d'étanchéité n'est pas nécessaire (voir EP-A1-0 401 083) tandis que pour des raccords dont les deux éléments à assembler sont rigides ou semi-rigides un joint d'étanchéité est interposé entre lesdits éléments comme montré, par exemple, dans FR-A-2 628 819 ou FR-A-2 632 707, ce dernier au nom de la Demanderesse, représentant l'état de la technique le plus proche, voir préambule de la revendication 1. Nonobstant les solutions déjà proposées, le besoin existe encore dans l'industrie, et en particulier dans le domaine de l'industrie automobile, de disposer d'un raccord pour la liaison entre eux de deux tubes ou tuyaux rigides ou semi-rigides qui permette d'établir de façon rapide, simple et sûre, d'une part, mais aussi, d'autre part, de manière démontable ou non, des liaisons étanches d'éléments de circuit de fluide liquide (eau, huile, essence) ou de fluide gazeux, comme de l'air.

C'est, par conséquent, un but général de l'invention de fournir un dispositif de raccord rapide et qui permette d'obtenir ces résultats.

C'est, aussi, un but de l'invention de fournir un tel dispositif de raccord rapide dont les caractéristiques, en particulier d'étanchéité, soient conservées au cours du temps.

C'est, encore, un but de l'invention de fournir un tel dispositif permettant le raccord de différents types de tubes ou tuyaux, par exemple de tuyaux en matière plastique ou de tubes en acier avec collerette, et cela de façon démontable ou non, suivant les desiderata de la pratique.

Un développement de l'invention fournit un dispositif procurant un contrôle aisé de la liaison qu'il permet de réaliser, d'une part, et qui, d'autre part, lorsqu'il est mis en oeuvre dans une version démontable soit d'un entretien extrêmement simple, procurant ainsi, notamment dans son application au domaine de l'automobile, des avantages considérables aux services d'après-vente.

A ces fins, il est proposé un dispositif de raccord rapide pour la liaison étanche entre eux de deux tubes ou tuyaux rigides ou semi-rigides, comprenant un joint d'étanchéité interposé entre lesdits tubes ou tuyaux lorsque l'extrémité libre du premier d'entre eux est introduite dans le second, coaxialement à celui-ci, ledit joint étant constitué par un manchon comportant à une de ses extrémités un bourrelet annulaire formé avec un boudin externe d'étanchéité et avec une face interne de butée de la tranche dudit premier tube ou tuyau sur lequel le joint est maintenu, des lames élastique étant fixées sur le second tube ou tuyau pour former des moyens de verrouillage coopérant avec la surface externe ou une collerette dudit premier tube ou tuyau et s'opposant à la séparation involontaire des deux tubes ou tuyaux, caractérisé en ce que le manchon comprend, sur sa surface cylindrique interne au voisinage de ses deux extrémités, deux joncs distants l'un de l'autre et coopérant avec la surface externe dudit premier tube ou tuyau pour le guidage et le maintien sur ce dernier dudit joint , ces joncs étant distants d'une longueur supérieure au diamètre du premier tube ou tuyau et dimensionnés de façon telle que celui qui est le plus proche du bourrelet annulaire offre une résistance à l'emmanchement du premier tube ou tuyau plus forte que celle de l'autre jonc .

Selon encore un développement de l'invention, le boudin d'étanchéité ménagé sur la surface externe du manchon du joint est dimensionné de manière telle qu'il offre une résistance, à son déplacement dans le second tube ou tuyau, plus importante que celle apportée par les joncs au déplacement du premier tube ou tuyau à l'intérieur du joint, avec pour conséquence que le joint ne coulisse dans ledit second tube ou tuyau que lorsqu'il est totalement emmanché sur le premier tube ou tuyau.

Selon un autre développement de l'invention, également, une douille destinée à servir de témoin d'assemblage est associée au manchon que présente le joint.

Dans une autre forme de réalisation, le dispositif comprend en outre une bague de démontage du raccord après assemblage, ladite bague, -qui est munie d'oreilles de préhension pour son actionnement simple par un utilisateur-, étant interposée entre la douille et ledit second tube ou tuyau.

L'invention sera bien comprise par la description qui suit, faite à titre d'exemple et en référence au dessin annexé dans lequel :
- la figure 1 est une vue partie en élévation et partie en coupe longitudinale d'un élément du dispositif de raccord selon l'invention ;
- la figure 2 est une vue de même élément partie en coupe et partie en élévation, à 90° de la précédente ;
- la figure 3 est une vue par bout selon la flèche A de la figure 1 ;
- la figure 4 est une vue en coupe longitudinale d'un joint et d'une douille de dispositif selon l'invention préalablement à son montage ;
- la figure 5 est une vue schématique en perspective d'une lame élastique faisant partie d'un dispositif selon l'invention ;
- la figure 6 en est une vue en élévation de dessus, à plus grande échelle ;
- la figure 7 est une demi-vue en coupe selon la ligne 7-7 de la figure 6 ;
- la figure 8 en est une vue par bout selon la flèche B de la figure 6 ;
- la figure 9 est une vue par bout d'une bague de déverrouillage ;
- la figure 10 est une vue de ladite bague partie en élévation, partie en coupe selon la ligne 10-10 de la figure 9 ;
- la figure 11 est une vue partie en élévation, partie en coupe longitudinale d'un dispositif selon l'invention en cours d'assemblage ;
- la figure 12 est une vue par bout du dispositif en cours d'assemblage, selon la flèche C de la figure 11 ;
- la figure 13 est une vue partie en élévation, partie en coupe longitudinale, du dispositif assemblé ;
- la figure 14 est une vue par bout dans cette condition d'assemblage selon la flèche D de la figure 13 ;
- la figure 15 est une vue en coupe, à plus petite échelle, d'un dispositif assemblé dans lequel un des éléments est un tube métallique à collerette.

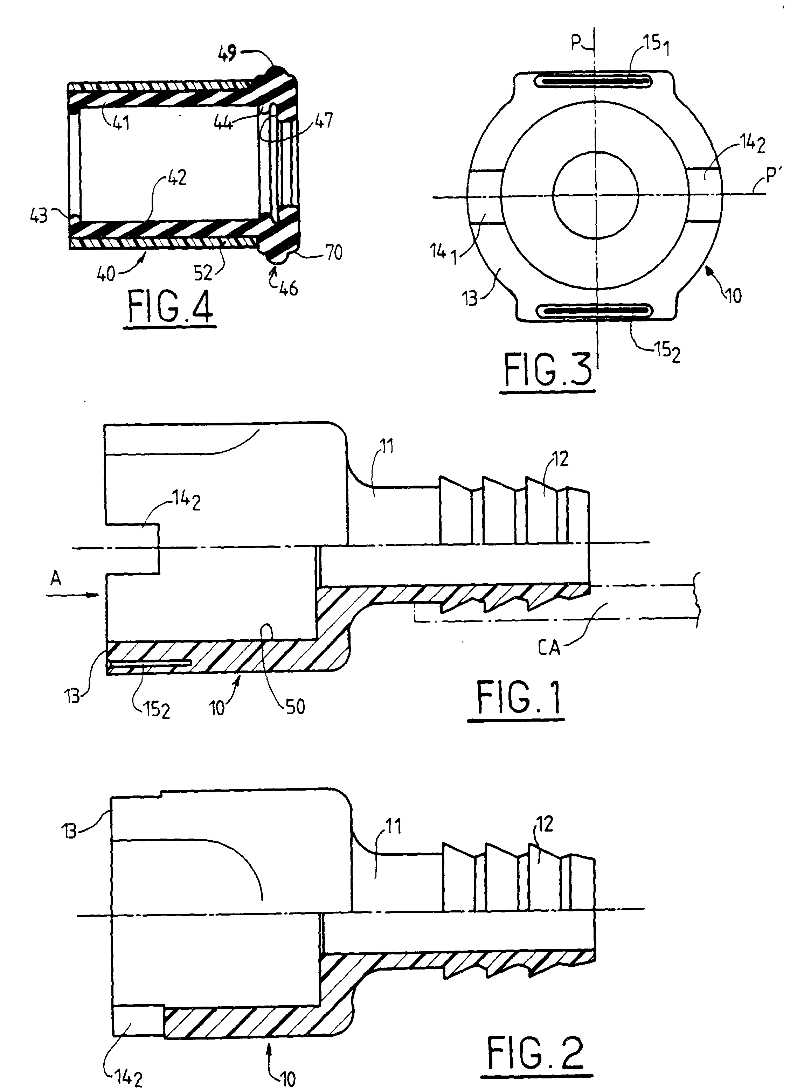

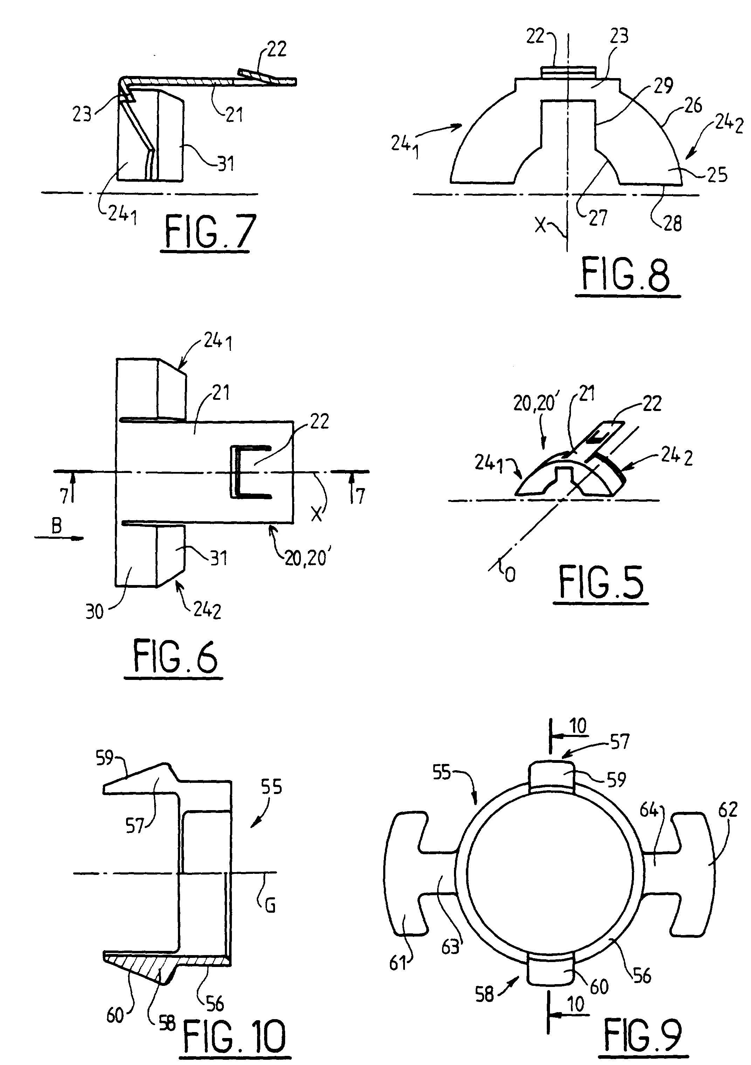

On se réfère d'abord aux figures 1 à 14 qui montrent un dispositif de raccord rapide selon l'invention pour tubes ou tuyaux semi-rigides, notamment pour tubes ou tuyaux en matière plastique destinés à être utilisés dans le domaine de l'industrie automobile, par exemple en tant que parties constitutives d'un circuit d'eau, d'essence, d'huile ou d'air. Le dispositif comprend un élément tubulaire 10 qui, dans la réalisation décrite et représentée, forme l'extrémité d'un embout 11 muni de cannelures en arêtes de poisson, 12, servant à la fixation, par des moyens non représentés, d'une canalisation souple CA, par exemple en caoutchouc ou matériau analogue. Sur la face frontale 13 d'extrémité de l'élément tubulaire 10, découpée suivant deux encoches diamétralement opposées 14₁ et 14₂, débouchent deux fentes diamétralement opposées, 15₁ et 15₂, dont le plan moyen de symétrie P est perpendiculaire au plan moyen de symétrie P' des encoches 14₁ et 14₂. Dans chacune des fentes 15 est logée une lame élastique 20 ou 20', figures 5 à 8, constituée par un corps sensiblement rectangulaire 21 dans lequel est découpée une languette 22 initialement défléchie pour faire saillie par rapport au plan dudit corps et, ainsi, solidariser ladite lame élastique à l'élément tubulaire 10 après introduction du corps 21 dans une fente 15. A son extrémité opposée à celle portant la languette 22, le corps 21 est replié suivant un bandeau 23 à contour généralement rectangulaire, incliné par rapport au plan du corps 21, figure 7, et qui porte à ses extrémités longitudinales deux jupes 24₁ et 24₂, respectivement, symétriques par rapport à un plan longitudinal moyen X de la lame 20. Comme bien montré sur les figures 5 à 8, chaque jupe 24 comprend :
- une face frontale 25 limitée par deux arc de cercles concentriques 26, 27, et des bords rayonnants 28 et 29, respectivement, ce dernier dirigé parallèlement au plan X ;
- une surface 30 sensiblement cylindrique d'axe O confondu avec l'axe F de l'élément tubulaire 10 lorsque la lame élastique 20 est montée sur ce dernier et qui se raccorde le long de l'arc 26 à la face frontale 25 ; et
- une surface en partie tronconique 31 qui prolonge la surface sensiblement cylindrique 30 à l'opposé de la face frontale 25.

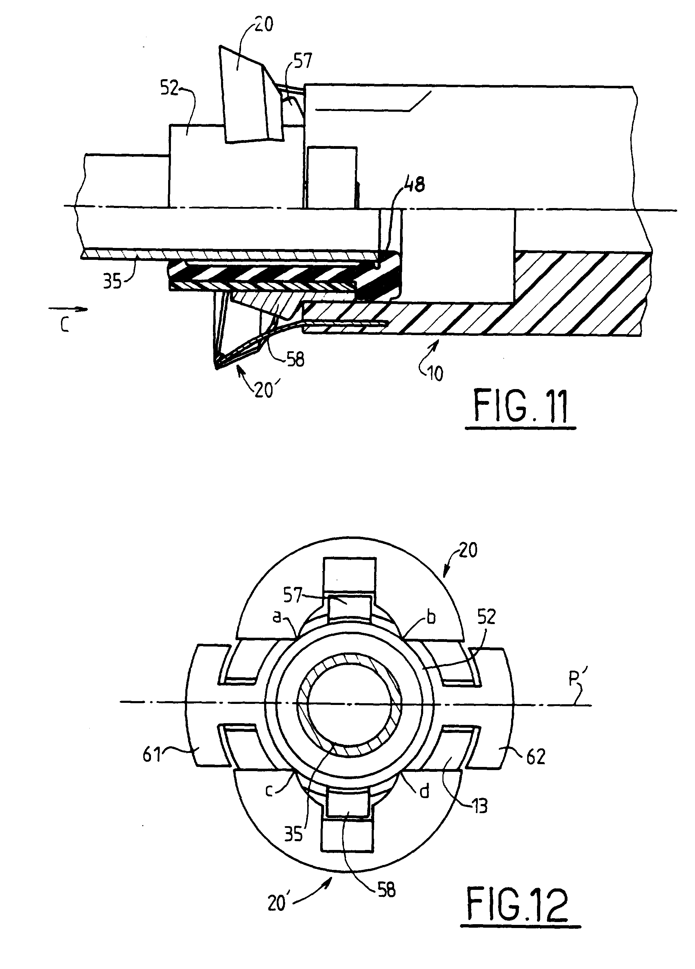

Les lames élastiques 20 et 20', symétriques par rapport au plan P' lorsqu'elles sont rendues solidaires de l'élément tubulaire 10 en étant introduites dans les fentes 15₁ et 15₂, respectivement, (figures 11 à 14) sont destinées à coopérer avec l'autre élément du raccord selon l'invention, par exemple un tube en matière plastique 35, lorsque celui-ci est introduit dans l'élément tubulaire 10 après avoir été garni d'un joint d'étanchéité 40, figure 4.

Ce dernier, constitué par un manchon cylindrique 41 en un matériau élastomère comme du caoutchouc d'une dureté Shore d'environ 70, est muni sur sa surface interne 42, et au voisinage de ses deux extrémités, de joncs 43 et 44, respectivement, propres à coopérer avec la surface externe 45 du tube 35 sur lequel ledit joint est emmanché et maintenu avant assemblage du raccord, les joncs 43 et 44 étant distants d'une longueur supérieure au diamètre du tube 35 d'une part et, d'autre part, dimensionnés de façon telle qu'après assemblage du tube et du joint, le jonc 44 est plus comprimé que le jonc 43 ou, en d'autres termes, offre à l'emmanchement du tube dans le joint une résistance plus importante que celle offerte par le jonc 43. A l'extrémité du manchon 41 adjacente au jonc 44 le joint 40 présente un bourrelet annulaire 46 qui ménage une face interne 47 avec laquelle est propre à coopérer la tranche d'extrémité 48 du tube 35 et dont la surface externe est conformée suivant un boudin 49 propre à coopérer à étanchéité avec la surface interne 50 de plus grand diamètre de l'élément tubulaire 10. Le bourrelet 46 est conformé et dimensionné de façon telle qu'il offre une résistance au déplacement dans l'élément tubulaire 10 plus grande que celle offerte par les joncs 43 et 44 au déplacement du tube 35 de sorte que, -et comme il sera explicité ci-après-, le joint 40 ne peut coulisser dans l'élément tubulaire 10 qu'après qu'il ait été totalement emmanché sur le tube 35, lors du rapprochement entre eux. des éléments constitutifs du dispositif de raccord.

Sur le manchon 41 du joint d'étanchéité 40, -dont la longueur est de l'ordre de deux à trois fois le diamètre du tube 35 pour assurer un bon guidage du tube dans le joint-, est fixée une douille 52 destinée à servir de témoin d'assemblage du raccord, ladite douille pouvant être surmoulée sur le manchon 4! lorsqu'elle est en matière plastique ou rapportée sur ledit manchon lorsqu'elle est métallique.

Le raccord peut être démontable ou non, à volonté, suivant qu'est présente ou ne l'est pas une bague 55, figures 9 et 10, avantageusement en matière plastique constituée par un fût 56 prolongé suivant la direction de son axe G par deux pattes 57 et 58 à section droite sensiblement triangulaire pour définir deux faces 59 et 60, respectivement, formant des rampes inclinées par rapport à la surface externe du fût 56 ; sur celui-ci sont également fixées deux oreilles de préhension 61, 62, disposées dans un plan perpendiculaire au plan moyen des pattes 57 et 58 et dont les âmes 63 et 64, qui les relient, respectivement, au fût ont une largeur correspondante aux encoches 14₁ et 14₂ de l'élément tubulaire 10 où elles peuvent ainsi se loger.

Pour l'assemblage du dispositif de raccord rapide selon l'invention, on rapporte d'abord le joint 40 sur le tube 35 jusqu'à butée de sa tranche 48 sur la face 47 du bourrelet 46, les joncs 43 et 44 assurant le guidage, l'étanchéité et la fixation du joint sur le tube. Ce dernier, garni du joint, est alors introduit dans l'élément tubulaire 10, lequel a été précédemment muni de la bague de démontage 55 lorsque le raccord est du type démontable. Au début de l'introduction de l'ensemble tube 35/joint 40 dans l'élément tubulaire 10, introduction qui est facilitée par la face avant 70 à section droite en quart de rond du bourrelet 46 (figure 4), la condition est celle montrée sur les figures 11 et 12, en laquelle les lames élastiques 20 et 20' sont écartées l'une de l'autre, perpendiculairement au plan diamétral moyen P' en tirant parti de l'élasticité du corps 21 desdites lames ; lorsque le mouvement de l'ensemble tube/joint d'étanchéité se poursuit dans le sens de la flèche C, figure 11, lesdites lames ne coopèrent avec la douille 52 qu'en des zones de contact quasi-ponctuelles a, b, c, d, figure 12, de leurs bords 27, 28, de sorte que le mouvement de coulissement de l'ensemble tube/joint s'effectue dans l'élément tubulaire 10 sans difficulté, et avec compression du bourrelet 46 lequel, à fin de mouvement, est plus comprimé que le jonc 44, lui-même plus comprimé que le jonc 43.

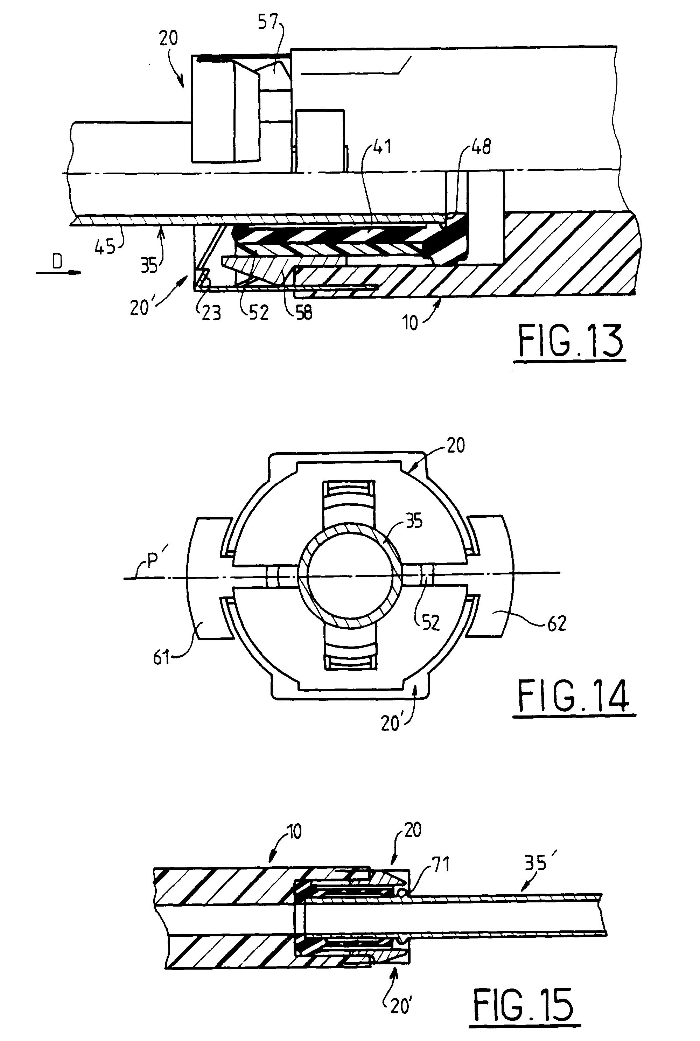

Dès que la douille 52 n'est plus en regard des bords libres des jupes 24 des lames élastiques 20, 20', ces dernières reprennent leur position non sollicitée et la condition est celle montrée sur les figures 13 et 14 en laquelle les jupes 24 coopèrent avec la surface externe du tube 35 sur lequel elles appuient avec un effet d'arc-boutement qui s'oppose à un désassemblage intempestif du dispositif.

Si le raccord doit être démonté, par exemple pour un entretien après-vente, il suffit à un opérateur de saisir les oreilles 61 et 62 de la bague 55 et de déplacer ladite bague dans le sens inverse de celui montré par la flèche D sur la figure 13 ; au cours de ce mouvement, les rampes inclinées 59 et 60 des pattes 57 et 58 entrent en contact avec les bandeaux 23 des lames 20 et 20' pour défléchir celles-ci vers l'extérieur du dispositif rendant ainsi inopératoires les moyens de verrouillage constitués par les jupes 24 et autorisant de ce fait l'extraction de l'ensemble tube/joint d'étanchéité de l'élément tubulaire 10.

C'est un mode de fonctionnement identique à celui décrit ci-dessus qui est mis en oeuvre lors de l'assemblage d'un raccord indémontable dans lequel la bague 55 est alors un simple fût tubulaire, -sans pattes comme 57, 58 ni oreilles 61, 62-, lorsque ladite bague existe, ou bien est totalement supprimée en contrepartie d'une douille de visualisation 52 de plus forte épaisseur.

C'est également le même mode opératoire de montage simple ou de montage/démontage qui est mis en oeuvre dans le dispositif illustré sur la figure 15 où le tube 35' est un tube métallique à collerette 71 sur laquelle viennent en prise, -à la fin de la phase d'assemblage-, les lames élastiques 20, 20' solidaires de la partie 10 du dispositif de raccord.

Quel que soit son mode de réalisation, le dispositif de raccord rapide selon l'invention fournit une excellente liaison des éléments du raccord entre eux, par la double étanchéité qu'assure le joint 40 et une bonne tenue en fonctionnement, en raison, d'une part, du guidage sur une longueur relativement grande des tubes ou tuyaux du raccord et, d'autre part, du verrouillage réalisé en dehors de la zone d'étanchéité par les lames élastiques 20, 20'.

Complémentairement, la douille 52, -dont la position par rapport aux lames élastiques est immédiatement visible-, renseigne l'utilisateur de façon simple quant au point de savoir si l'assemblage est satisfaisant, tandis que la présence éventuelle de la bague de démontage aisément accessible de l'extérieur autorise, en cas de besoin, une grande facilité d'entretien, par exemple pour un changement de joint d'étanchéité.

## Revendications

1. Dispositif de raccord rapide pour la liaison étanche entre eux de deux tubes ou tuyaux rigides ou semi-rigides, comprenant un joint d'étanchéité (40) interposé entre lesdits tubes ou tuyaux lorsque l'extrémité libre du premier d'entre eux est introduite dans le second, coaxialement à celui-ci, ledit joint (40) étant constitué par un manchon (41) comportant à une de ses extrémités un bourrelet annulaire (46) formé avec un boudin externe d'étanchéité (49) et avec une face interne (47) de butée de la tranche (48) dudit premier tube ou tuyau (35, 35') sur lequel le joint (40) est maintenu, des lames élastique (20, 20') étant fixées sur le second tube ou tuyau (10) pour former des moyens de verrouillage (24₁, 24₂) coopérant avec la surface externe (45) ou une collerette (71) dudit premier tube ou tuyau (35, 35') et s'opposant à la séparation involontaire des deux tubes ou tuyaux, caractérisé en ce que le manchon (41) comprend, sur sa surface cylindrique interne (42) au voisinage de ses deux extrémités, deux joncs (43, 44) distants l'un de l'autre et coopérant avec la surface externe (45) dudit premier tube ou tuyau (35, 35') pour le guidage et le maintien sur ce dernier dudit joint (40), ces joncs (43, 44) étant distants d'une longueur supérieure au diamètre du premier tube ou tuyau (35, 35') et dimensionnés de façon telle que celui (44) qui est le plus proche du bourrelet annulaire (46) offre une résistance à l'emmanchement du premier tube ou tuyau (35, 35') plus forte que celle de l'autre jonc (43).

2. Dispositif selon la revendication 1, caractérisé en ce qu'une douille (52) destinée à servir, entre autres, de témoin d'assemblage, est associée au manchon (41).

3. Dispositif de raccord rapide selon la revendication 2, caractérisé en ce qu'il comprend, en outre, une bague (55) de démontage du raccord, ladite bague, -qui est munie d'oreilles de préhension (61, 62) pour son actionnement par un utilisateur-, étant interposée entre la douille (52) et ledit second tube ou tuyau (10).

4. Dispositif selon la revendication 3, caractérisé en ce que la bague de démontage (55) comprend des pattes (57, 58) présentant des rampes inclinées (59, 60) propres à coopérer, chacune, avec un bandeau (23) des lames élastiques (20, 20') pour écarter les moyens de verrouillage (24₁, 24₂) que comportent lesdites lames (20, 20') du tube ou tuyau (35, 35') avec lequel ils coopèrent après assemblage.

5. Dispositif selon l'une des revendications précédentes, caractérisé en ce que le boudin d'étanchéité (49) ménagé sur la surface externe du manchon (41) est dimensionné de manière telle qu'il offre une résistance à son déplacement dans le second tube ou tuyau plus importante que celle qu'apportent les joncs (43, 44) au déplacement du premier tube ou tuyau à l'intérieur du joint.

## Patentansprüche

1. Schnellschlußvorrichtung, um zwei starre oder halbstarre Rohre oder Schläuche dicht miteinander zu verbinden, die ein Dichtstück (40) umfaßt, das zwischen die besagten Rohre oder Schläuche eingefügt wird, wenn das freie Ende des ersten in den zweiten eingeführt wird, und zwar koaxial zu diesem, das besagte Dichtstück (40) besteht dabei aus einer Hülse (41), die an einem ihrer Enden einen ringfömigen Wulst (46) umfaßt, der mit einem äußeren Dichtwulst (49) und einer inneren Fläche (47) als Widerlager für die Stirnfläche (48) des besagten Rohres oder Schlauches (35, 35') ausgebildet ist, auf dem die Dichtung (40) gehalten wird, elastische Lamellen (20, 20'), die auf dem zweiten Rohr oder Schlauch (10) befestigt sind und die Mittel zum Schließen bilden, indem sie mit der äußeren Oberfläche (45) oder mit einem Dichtrand (71) des besagten ersten Rohres oder Schlauches (35, 35') zusammenwirken und sich der unerwünschten Trennung der beiden Rohre oder Schläuche widersetzen, dadurch gekennzeichnet, daß die Hülse (41) auf ihrer inneren zylindrischen Oberfläche (42) in der Nähe ihrer beiden Enden zwei Ringe (43, 44) umfaßt, die voneinander entfernt sind und mit der äußeren Oberfläche (45) des ersten Rohres oder Schlauches (35, 35') zur Führung und zum Halten der besagten Dichtung (40) auf dem zweiten zusammenwirken, diese Ringe (43, 44) sind in einem Abstand voneinander entfernt, der größer ist als der Durchmesser des besagten ersten Rohres oder Schlauches (35, 35'), und der so dimensioniert ist, daß derjenige Ring (44), der dem ringförmigen Wulst (46) am nächsten liegt, dem Einführen des ersten Rohres oder Schlauches (35, 35') einen größeren Widerstand bietet als derjenige des anderen Ringes (43).

2. Vorrichtung gemäß Anspruch 1, dadurch gekennzeichnet, daß eine Buchse (52), die dazu vorgeschen ist, unter anderem als Beweis für die Verbindung zu dienen, mit der Hülse (41) verbunden ist.

3. Schnellschlußvorrichtung gemäß Anspruch 2, dadurch gekennzeichnet, daß sie unter anderem einen Ring (55) zum Auseinandernehmen des Anschlusses umfaßt, wobei der besagte Ring, - der mit Griffflügeln (61, 62) zur Bedienung durch den Anwender versehen ist -, zwischen der Buchse (52) und dem besagten zweiten Rohr oder Schlauch angebracht ist.

4. Vorrichtung gemäß Anspruch 3, dadurch gekennzeichnet, daß der Ring zum Auseinandernehmen (55) Halterungen (57, 58) umfaßt, die geneigte Flächen (59, 60) haben, die geeignet sind, jeweils mit einer zunge (23) der elastischen Lamellen (20, 20') des Rohres oder Schlauches (35, 35') zusammenzuwirken, um die Mittel zum Schließen (24₁, 24₂) zu spreizen, welche die besagten Lamellen (20, 20') des Rohres oder Schlauches (35, 35') umfassen, mit denen sie nach dem Anschließen zusammenwirken.

5. Vorrichtung gemäß einem der vorhergehenden Ansprüche, dadurch gekennzeichnet, daß der Dichtwulst (49), der auf der äußeren Fläche der Hülse (41) ausgebildet ist, so dimensioniert ist, daß er seiner Verschiebung im zweiten Rohr oder Schlauch einen größeren Widerstand entgegensetzt als die Ringe (43, 44) gegen das Verschieben des ersten Rohres oder Schlauches im Inneren der Dichtung bewirken.

## Claims

1. A rapid connecting device for the leaktight interconnection of two rigid or semi-rigid tubes or pipes, comprising a sealing joint (40) interposed between said tubes or pipes when the free end of the first said tube or pipe is inserted in the second, coaxially therewith, the said joint (40) consisting of a sleeve (41) having at one end an annular bead (46) formed with an outer sealing flange (49) and having an inner surface (47) for abutting on the section (48) of said first tube or pipe (35,35') on which the joint (40) is held, resilient blades (20,20') being fixed to the second tube or pipe (10) to form locking means (24₁,24₂) cooperating with the outer surface (45) or a collar (71) of said first tube or pipe (35,35') and preventing accidental separation of the two tubes or pipes, characterised in that the sleeve (41) comprises, on its inner cylindrical surface (42), close to the two ends thereof, two retaining rings (43,44) spaced apart from one another and cooperating with the outer surface (45) of said first tube or pipe (35,35') for guiding said joint (40) and holding it in position on said tube or pipe (35,35'), these retaining rings (43,44) being spaced apart by a length which is greater than the diameter of the first tube or pipe (35,35') and being of such dimensions that the one (44) which is closest to the annular bead (46) presents greater resistance to the fitting on of the first tube or pipe (35,35') than does the other retaining ring (43).

2. A device according to claim 1, characterised in that a socket (52) which is intended to act, inter alia as proof of assembly, is associated with the sleeve (41).

3. A rapid connecting device according to claim 2, characterised in that it further comprises a ring (55) for dismantling the connection, said ring, which is provided with gripping lugs (61,62) for actuation thereof by a user, being interposed between the socket (52) and said second tube or pipe (10).

4. A device according to claim 3, characterised in that the dismantling ring (55) has tabs (57,58) having inclined ramps (59,60) each adapted to cooperate with a band (23) of the resilient blades (20,20') in order to move the locking means (24₁,24₂) of said blades (20,20') away from the tube or pipe (35,35') with which they cooperate after assembly.

5. A device according to one of the preceding claim, characterised in that the sealing flange (49) formed on the outer surface of the sleeve (41) is of such dimensions that it offers greater resistance to movement in the second tube or pipe than the resistance provided by the retaining rings (43, 44) to the movement of the first tube or pipe inside the joint.
